# EUROPÄISCHE PATENTSCHRIFT

(11) **EP 2 106 227 B1**
(45) Veröffentlichungstag und Bekanntmachung des Hinweises auf die Patenterteilung: **17.04.2013**
(21) Anmeldenummer: 07857678.2
(22) Anmeldetag: 17.12.2007
(51) Int. Cl.: A47J 27/04

(54) **GARGERÄT MIT EINEM GARBEHÄLTER**
COOKING APPLIANCE WITH A COOKING CHAMBER
APPAREIL DE CUISSON POURVU D'UN RÉCIPIENT DE CUISSON

(30) Priorität: 21.12.2006 EP 06360059
(43) Veröffentlichungstag der Anmeldung: 07.10.2009
(73) Patentinhaber: BSH Bosch und Siemens Hausgeräte GmbH, 81739 München (DE)
(72) Erfinder: DESOR, Jürgen, 67100 Strasbourg (FR); KUNZE, Martina, 67000 Strasboug (FR); LEGO, Dieter, 76137 Karlsruhe (DE)
(86) Internationale Anmeldenummer: PCT/EP2007/064047
(87) Internationale Veröffentlichungsnummer: WO 2008/077836

(56) Entgegenhaltungen:
- DE-A1- 4 116 425
- DE-A1- 4 316 280
- US-A- 3 869 596
- US-A- 4 759 342
- US-A- 5 767 487
- US-A1- 2003 003 209

## Beschreibung

Die Erfindung betrifft ein Gargerät mit einem Garbehälter. Ein weiterer Aspekt der Erfindung betrifft ein Gargerät mit einem Garbehälter und einem Heizelement.

Aus dem Stand der Technik sind Gargeräte bekannt, welche einerseits zum Durchführen eines Zubereitungsvorgangs Dämpfen ausgebildet sind. Darüber hinaus sind Gargeräte bekannt, welche ein Braten von Lebensmitteln ermöglichen. Des Weiteren ist ein Gargerät bekannt, welches ein scharfes Anbraten von Lebensmitteln mit einem anschließenden Zubereitungsvorgang des Schmorens im Bräter ermöglicht.

Darüber hinaus ist aus der DE 10 2005 042 525 A1 ein Gargerät mit einem Garbehältnis und einer Beschickungsöffnung sowie einem Deckel zum Schließen der Beschickungsöffnung des Garbehältnisses bekannt. Die unterschiedlichen separaten Geräte sind zum Durchführen unterschiedlicher Zubereitungsvorgänge ausgebildet.

Aus der Druckschrift DE 41 16 425 A1 ist eine Vorrichtung bekannt, welche zum Erhitzen von Nahrungsmitteln dient und einen das Gargut aufnehmenden und mit einer Tür verschließbaren Garraum aufweist. Die Nahrungsmittel können insgesamt bei drei unterschiedlichen Temperaturen behandelt werden: Bei einer ersten Temperatur bis etwa 100 °C, bei einer zweiten Temperatur bis etwa 200 °C sowie bei einer dritten Temperatur von etwa 300 °C oder mehr. Die erste Temperatur ist zum Kochen oder Dämpfen geeignet, während die zweite Temperatur zum Backen oder Schmoren und die dritte Temperatur zum Braten geeignet ist.

Die Druckschrift US 4 759 342 A beschreibt eine Pfanne zum Braten von Lebensmitteln, welche eine erste Aufnahme für die zu behandelnden Lebensmittel, wie auch eine zweite Aufnahme aufweist, welche zur Aufnahme von Wasser und somit zur Erzeugung von Dampf ausgebildet ist. Die zweite Aufnahme ist beispielsweise außenumfänglich und konzentrisch angeordnet.

Es ist Aufgabe der vorliegenden Erfindung, ein Gargerät zu schaffen, welches im Hinblick auf die Zubereitung multifunktional ausgebildet ist. Des Weiteren soll die Zubereitung von Gargut bei verschiedenen Zubereitungsvorgängen verbessert werden.

Diese Aufgabe wird durch ein Gargerät gelöst, welches die Merkmale nach Patentanspruch 1 aufweist.

Bei einem Aspekt der Erfindung umfasst ein erfindungsgemäßes Gargerät ein Garbehältnis, welches bevorzugterweise als fest installierter Topf oder dergleichen in dem Gargerät angeordnet ist. Das Garbehältnis bzw. der Garbehälter wird oftmals auch als Garbecken bezeichnet. Das Gargerät umfasst Mittel zum Durchführen mehrerer unterschiedlicher Zubereitungsvorgänge, nämlich einem Dämpfen, einem Braten und einem Schmoren. In einem einzigen Gargerät wird somit eine Multifunktionalität im Hinblick auf verschiedene Zubereitungsvorgänge ermöglicht. Das Gargerät ist mit seinen Mitteln integral so ausgebildet, dass insbesondere die spezifischen Zubereitungsvorgänge Dämpfen, Braten und Schmoren allesamt mit einem einzigen Gerät durchgeführt werden können.

Der Garbehälter weist einen ersten Teilbereich zur Dampferzeugung und einen zweiten Teilbereich zum Braten auf.

Bevorzugt ist im Boden des Garbehälters, insbesondere im ersten Teilbereich des Garbehälters, eine Ablassöffnung ausgebildet, welche mit einem Abflussstopfen verschließbar ist. Der Abflussstopfen ist bevorzugterweise durch Betätigung eines Ablasshahns heb- und senkbar. Dadurch kann der Abflussstopfen einfach bewegt werden und das Öffnen und Schließen der Ablassöffnung aufwandsarm durchgeführt werden. Die Betätigung des Ablasshahns kann manuell durch eine Bedienperson oder aber auch automatisch durch einen Stellmotor erfolgen. Bevorzugt kann der integrierte Abflussstopfen im Garbehälterboden durch ein Kugelhahnventil geöffnet werden. Dadurch kann eine Reinigung prinzipiell durchgeführt werden, welche durch die vorteilhafte Ausgestaltung sehr nutzerfreundlich ermöglicht wird.

Der Boden des Garbehälters umfasst zumindest eine Verbundplatte, wobei unterhalb der Verbundplatte ein Heizelement angeordnet ist. Durch die Ausgestaltung mit der Verbundplatte kann die Zubereitung eines Garguts verbessert werden.

Durch die Verbundplatte kann darüber hinaus eine sehr gute Wärmeankopplung mit einem hohen Wirkungsgrad erreicht werden. Die Infrarotstrahlung kann sehr gering gehalten werden. Darüber hinaus kann mit der Verbundplatte eine sehr kurze Aufheizzeit auf eine relativ hohe Temperatur erreicht werden.

Bevorzugt ist zwischen der Verbundplatte und dem Heizelement eine Zusatzplatte, insbesondere eine zumindest anteilig aus Graphit ausgebildete Platte, angeordnet sein. Durch diese Ausgestaltung kann eine verbesserte Anbringung des Heizelements erfolgen, welches bevorzugterweise vollflächig an dieser Zusatzplatte angeordnet ist. Indem das Heizelement sehr gut anliegend angebracht werden kann, kann eine lokale Überhitzung verhindert werden.

Bevorzugt sind die Verbundplatte, die Zusatzplatte und das Heizelement lösbar miteinander verbunden, insbesondere miteinander verschraubt. Durch diese Ausgestaltung kann eine sehr schnelle Montage ermöglicht werden. Im Servicefall oder bei einem Austausch eines defekten Elements kann dies sehr einfach und aufwandsarm erfolgen und einzelne Teilkomponenten können kostengünstig ersetzt werden.

Bevorzugt ist am Boden des ersten Teilbereichs des Garbehälters eine erste Verbundplatte und am Boden des zweiten Teilbereichs des Gargeräts eine zweite Verbundplatte ausgebildet. Jeder Teilbereich umfasst somit eine eigene Verbundplatte und jeder Teilbereich des Garbehälters kann somit separat zur Zubereitung und zum Durchführen eines individuellen Zubereitungsvorgangs zu einer optimalen Wärmeankopplung durch das Heizelement zu einer Wärmeabgabe an das Gargut verwendet werden.

Bevorzugt umfasst die Verbundplatte eine Schicht aus Edelstahl und eine Schicht aus Aluminium. Durch die Aluminiumschicht kann eine sehr gute Wärmeverteilung in der Verbundplatte erreicht werden. Darüber hinaus kann dadurch eine sehr geringe Rahmenerwärmung durch Trennen der Aluminiumschicht in der Verbundplatte ermöglicht werden.

Bevorzugt umfasst die Verbundplatte zwei Edelstahlschichten, zwischen denen eine Aluminiumschicht ausgebildet ist. Die Verbundplatte ist somit ähnlich einer Sandwichkonstruktion aufgebaut. Beispielsweise können sehr gute Aufheizzeiten von zwei bis vier Minuten beim Aufheizen auf eine Temperatur von etwa 250°C erreicht werden, wobei die Aufheizzeit auf eine derartige Temperatur bei einer Dicke der Verbundplatte von etwa 10 mm etwa vier Minuten und bei einer Dicke von etwa 4 mm etwa zwei Minuten, beträgt.

Bevorzugt ist in der Verbundplatte eine Aussparung ausgebildet, in welcher ein Temperatursensor angeordnet ist. Insbesondere ist die Aussparung in etwa mittig der Verbundplatte ausgebildet. Besonders günstig erweist es sich, wenn die Aussparung lochartig konstruiert ist und sich von der Unterseite der Verbundplatte in die Verbundplatte hinein erstreckt. Bevorzugt ist die Aussparung sowohl durch das Heizelement als auch durch die Zusatzplatte durchgängig ausgebildet und erstreckt sich innerhalb der Verbundplatte bis an die Unterseite der obersten Edelstahlschicht. Der Temperatursensor misst somit im Wesentlichen direkt die Temperatur an dieser obersten Edelstahlschicht. Durch diese Anordnung des Temperatursensors kann der Temperaturabgriff des gesamten Systems ermöglicht werden.

Bevorzugt ist vorgesehen, dass die Verbundplatte unlösbar in dem Garbehälter integriert ist. Es kann vorgesehen sein, dass die Verbundplatte in den Garbehälter eingeklebt ist. Insbesondere kann dies mit Silikonklebstoff erfolgen. Es kann jedoch auch vorgesehen sein, dass die Verbundplatte in den Garbehälter eingeschweißt ist. Insbesondere kann die Verbundplatte mit dem Rahmen des Garbehälters verklebt bzw. lasergeschweißt sein und somit unlösbar mit diesem verbunden sein. Die Bratfläche kann somit fest integriert sein.

Es kann jedoch auch vorgesehen sein, dass die Verbundplatte, insbesondere die Verbundplatte, die Zusatzplatte und das Heizelement, lösbar an dem Garbehälter angebracht sind. Dadurch kann der modulare Aspekt des Gargeräts hervorgehoben werden und die situationsabhängig erforderliche Einbringung gewährleistet werden. Auch die Reinigung, die Wartung und dergleichen können dadurch vereinfacht erfolgen.

Bevorzugt ist zumindest die Verbundplatte, insbesondere die Verbundplatte, die Zusatzplatte und das Heizelement, in den Garbehälter einsteckbar. Dadurch kann der gesamte Heizkörper und die dazu vorgesehenen Wärmeübertragungskomponenten mobil verwendbar und darüber hinaus vollständig wasserdicht gekapselt angeordnet werden. Bevorzugt wird dieser Heizkörper umfassend die Verbundplatte, die Zusatzplatte und das Heizelement auf ein Dampferzeugungsbecken mit Führung, Auflagerand und Kontakt positioniert und von dort entnommen. Auch eine kompatible Verwendung bei oder für andere Geräte zum Zubereitung kann vorgesehen sein.

Bei einer bevorzugten Ausführung kann vorgesehen sein, dass der erste Teilbereich des Garbehälters unterhalb des zweiten Teilbereichs angeordnet ist. Bei einer derartig vertikal übereinander gestapelten Ausgestaltung kann somit bevorzugt der Teilbereich zur Dampferzeugung unterhalb dem Teilbereich zum Braten angeordnet sein. Bevorzugt ist der erste Teilbereich separat zu dem zweiten Teilbereich des Garbehälters ausgebildet und mit dem zweiten Teilbereich lösbar verbunden. Insbesondere kann vorgesehen sein, dass der zweite Teilbereich auf den ersten Teilbereich aufsetzbar ist und die beiden Teilbereiche mittels Verschlusselementen verbindbar sind. Hierbei kann beispielsweise eine Schnappverbindung, einen Klippverbindung oder eine Rastmechanik vorgesehen sein. Diese Verschlusselemente sind lediglich beispielhaft und es kann auch jede andere lösbare Verbindungsmechanik vorgesehen sein.

Bei einer weiteren Ausführung des Garbehälters kann vorgesehen sein, dass dieser einstückig ausgebildet ist und die beiden Teilbereiche integral konzipiert sind. Die beiden Teilbereiche sind bei dieser Ausgestaltung nicht als separate Komponenten vorhanden, sondern sind positionsstabil zueinander in dem Garbehälter ausgebildet. Bevorzugt ist ein einstückig zusammenhängender Zubereitungsraum innerhalb des Garbehälters vorgesehen, in welchem die beiden Teilbereiche jeweils einen anteiligen Teilraum umfassen. Die Teilbereiche sind so nebeneinander angeordnet, dass sie jeweils an eine den Garbehälter seitlich begrenzenden Seitenwand angrenzen. Die Seitenwand ist somit auch bereichsweise jeweils als Begrenzungswand der Teilbereiche ausgebildet.

Bevorzugt ist vorgesehen, dass der Garbehälter mit zwei unterschiedlichen Tiefen ausgebildet ist, wobei der erste Teilbereich mit einer ersten Tiefe ausgebildet und der zweite Teilbereich mit einer zweiten Tiefe ausgebildet ist. Bevorzugt weist der erste Teilbereich eine größere Tiefe auf als der zweite Teilbereich.

Durch die Ausgestaltung des Garbehälters mit verschieden tiefen Bereichen oder durch die Ausbildung von zwei separaten Teilbereichen, welche aufeinander gesetzt werden können und lösbar miteinander verbunden sind, können Mittel bereitgestellt werden, durch welche die Zubereitungsvorgänge Dämpfen, Braten und Schmoren mit dem multifunktionalen Gargerät ausgeführt werden können. Die unterschiedlichen Betriebsarten können über Bedienknebel ausgewählt werden.

Derjenige Teilbereich, welcher zur Dampferzeugung vorgesehen ist, und somit die Dampferzeugungszone, kann auch als Auffangwanne für beim Zubereiten abtropfendes Fetts vom Gargut oder für Soßen verwendet werden.

Insbesondere der in der Verbundplatte integrierte Temperatursensor ist auch zum Erkennen eines Wassermangels in dem ersten Teilbereich ausgebildet und zur entsprechenden Signalabgabe ausgebildet.

Erfindungsgemäß umfasst das Gargerät einen Garbehälter und ein Heizelement, wobei der Boden des Garbehälters zumindest eine Verbundplatte umfasst, an dessen Unterseite das Heizelement angeordnet ist. Durch diese Ausgestaltung mit einer zusätzlichen Verbundplatte am oder im Boden des Garbehälters kann die Wärmeankopplung wesentlich verbessert werden.

Die Verbundplatte ist bevorzugt als mehrschichtiges System ausgebildet. Bevorzugt umfasst die Verbundplatte zumindest eine Edelstahlschicht und zumindest eine Aluminiumschicht. Dadurch kann die Wärmeverteilung sehr gut erfolgen und eine sehr geringe Rahmenerwärmung an der Schnittstelle zwischen der Verbundplatte und dem Rahmen kann dadurch gewährleistet werden. Darüber hinaus kann eine Überhitzung aufgrund von schlecht anliegenden Heizelementen verhindert werden.

Bevorzugt umfasst die Verbundplatte zwei Edelstahlschichten, zwischen denen eine Aluminiumschicht angeordnet ist.

Zwischen der Verbundplatte und dem Heizelement ist bevorzugterweise eine Zusatzplatte, insbesondere eine zumindest anteilig Graphit umfassende Platte, angeordnet. Bevorzugt umfasst der Garbehälter einen ersten und einen zweiten Teilbereich, wobei der Boden des ersten Teilbereichs eine erste Verbundplatte und der Boden des zweiten Teilbereichs eine zweite Verbundplatte aufweist. Das Gargerät kann zum Dämpfen und/oder Braten und/oder Schmoren ausgebildet sein.

Sowohl das Gargerät betreffend den ersten Aspekt der Erfindung, als auch das Gargerät betreffend den zweiten Aspekt der Erfindung umfassen eine Abdeckhaube, welche zum Abdecken des Garbehälters angeordnet ist. Die Abdeckhaube kann aus Glas ausgebildet sein.

Die Temperatur wird je nach Betriebsart bzw. Zubereitungsvorgang über einen Temperatursensor am Rand des Garbehälters oder über einen Temperatursensor am bzw. im Boden des Garbehälters geregelt.

Vorteilhafte Ausführungen des ersten Aspekts der Erfindung sind als vorteilhafte Ausführungen des zweiten Aspekts der Erfindung anzusehen und umgekehrt.

Ausführungsbeispiele der Erfindung werden nachfolgend anhand schematischer Zeichnungen näher erläutert. Es zeigen:
- Fig. 1: eine schematische Schnittdarstellung durch ein erstes Ausführungsbeispiel eines erfindungsgemäßen Gargeräts;
- Fig. 2: eine Ansicht von unten des Gargeräts gemäß Fig. 1;
- Fig. 3: eine Schnittdarstellung durch ein zweites Ausführungsbeispiel eines erfindungsgemäßen Gargeräts; und
- Fig. 4: eine Schnittdarstellung durch einen Teilbereich eines Garbehälters des Gargeräts.

In den Figuren werden gleiche oder funktionsgleiche Elemente mit den gleichen Bezugszeichen versehen.

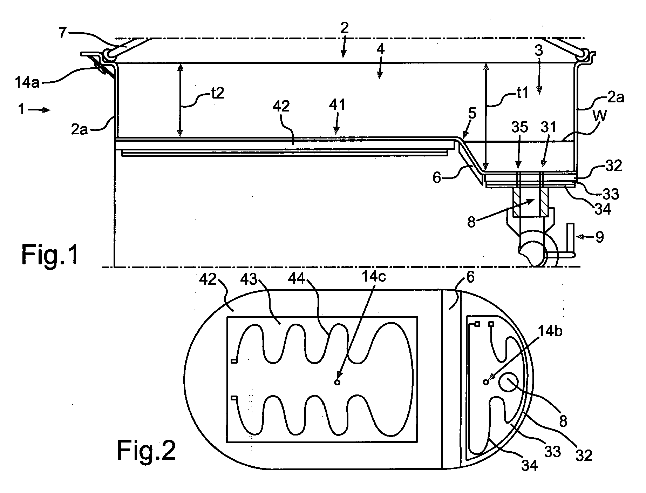

In Fig. 1 ist eine Schnittdarstellung durch ein Gargerät 1 gezeigt, welches als Dampfbräter ausgebildet ist. Das Gargerät 1 umfasst Mittel zum Durchführen der Zubereitungsvorgänge Dämpfen, Braten und Schmoren.

Das Gargerät 1 umfasst einen Garbehälter 2, welcher einstückig ausgebildet ist und einen ersten Teilbereich 3 sowie einen zweiten Teilbereich 4 aufweist. Der erste Teilbereich 3 weist im Ausführungsbeispiel eine Tiefe t1 auf, welche größer ist als die Tiefe t2 des zweiten Teilbereichs 4. Der erste Teilbereich 3 ist zur Wasserdampferzeugung ausgebildet und weist einen Wasserstand W auf, welcher sich unterhalb des Niveaus der Oberkante des Bodens 41 des zweiten Teilbereichs 4 erstreckt. Die beiden Teilbereiche 3 und 4 sind nebeneinander angeordnet und jeweils bereichsweise durch eine Seitenwand 2a des Garbehälters 2 begrenzt.

Ein Boden 31 des ersten Teilbereichs 3 umfasst eine erste Verbundplatte 32 und eine mit der Verbundplatte 32 verbundene Zusatzplatte 33, welche aus Graphit ausgebildet ist.

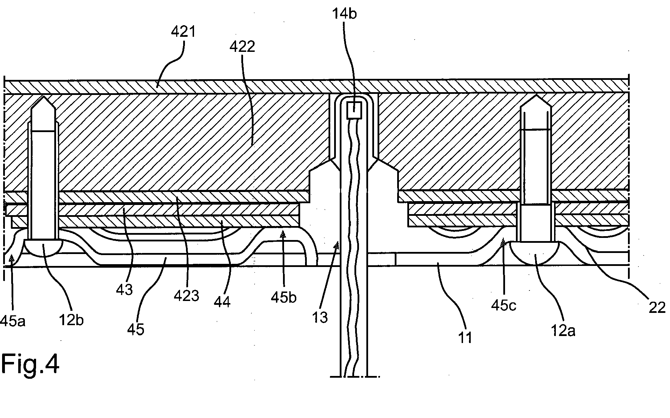

Wiederum an der Unterseite der Zusatzplatte 33 ist zumindest ein Heizkörper bzw. ein Heizelement 34 angeordnet. Die Verbundplatte 32 ist ein Mehrschichtsystem, welches eine Edelstahlschicht und eine Aluminiumschicht aufweist und in der Erläuterung zu Fig. 4 präzisiert wird. Durch diese Ausgestaltung im ersten Teilbereich 3 wird eine kleine Bratzone realisiert.

Darüber hinaus ist in dem Boden 31 und somit auch der Verbundplatte 32, der Zusatzplatte 33 und dem Heizelement 34 eine Auslassöffnung 35 ausgebildet, welche durch einen Abflussstopfen 8 geöffnet und geschlossen werden kann. Dieser Abflussstopfen 8 kann über einen Ablasshahn 9 geöffnet oder geschlossen werden. Der Ablasshahn 9 kann manuell durch eine Bedienperson oder motorisch gesteuert geöffnet und geschlossen werden. Eine Reinigung des Garbehälters 2 kann dadurch einfach und aufwandsarm durchgeführt werden. Der integrierte Abflussstopfen 8 kann abhängig von der Betätigung des Ablasshahns 9 angehoben und abgesenkt werden.

In dem höher gelegenen Boden 41 des zweiten Teilbereichs 4 ist ebenfalls eine Verbundplatte 42 angeordnet, welche separat zur Verbundplatte 32 im ersten Teilbereich 3 angeordnet ist. Zwischen dieser Verbundplatte 42 und der Verbundplatte 32 ist ein Trennelement 6 angeordnet, welches an einer schräg verlaufenden Wand 5 des Gesamtbodens des Garbehälters 2 angeordnet ist. An der Unterseite dieser zweiten Verbundplatte 42 ist wiederum eine Zusatzplatte 43 angeordnet, welche aus Graphit ausgebildet ist. Auf der Unterseite dieser Zusatzplatte 43 ist zumindest ein Heizkörper bzw. ein Heizelement 44 angeordnet. Durch diese Ausgestaltung ist eine große Bratzone des Gargeräts 1 ausgebildet.

Im Ausführungsbeispiel sind die Verbundplatten 32 und 42 mit einer Dicke von etwa 10 mm ausgebildet. Darüber hinaus sind die Verbundplatten 32 und 42 mittels Silikonkleber eingesetzt. Die Bratflächen sind bei dieser Ausgestaltung somit fest in dem Gargerät integriert. Die Dampferzeugungszone bzw. der erste Teilbereich 3 kann neben der Funktionalität zur Wasserdampferzeugung auch als Auffangwanne für Fett und Soßen und dergleichen verwendet werden.

Jeweils in die Verbundplatten 32 und 42 integriert ist ein Temperatursensor 14b und 14c (Fig. 2), welcher zur Temperaturerfassung des Bodens 31 bzw. 41 der jeweiligen Teilbereiche 3 und 4 ausgebildet ist.

Darüber hinaus ist ein weiterer Temperatursensor 14a als Dampffühler am oberen Rand des Garbehälters 2 angeordnet.

In Fig. 2 ist eine Ansicht von unten auf das Gargerät 1 gemäß Fig. 1 gezeigt. In der schematischen Darstellung ist die geometrische Grundform des Bodens 31 bzw. 41 des Garbehälters 2 gezeigt.

An der Unterseite der Zusatzplatte 43 ist das geschwungene Heizelement 44 angeordnet. Die Zusatzplatte 43 ist mit kleineren Ausmaßen als die Verbundplatte 42 ausgebildet. In entsprechender Weise ist die Zusatzplatte 33 im ersten Teilbereich 3 kleiner ausgebildet als die Verbundplatte 32. Auch hier ist das geschlängelte Heizelement 34 auf der Zusatzplatte 33 angebracht. Darüber hinaus sind die Positionen der beiden Temperatursensoren 14b und 14c im Bereich des Bodens 31 bzw. 41 des ersten Teilbereichs 3 bzw. des zweiten Teilbereichs 4 angedeutet.

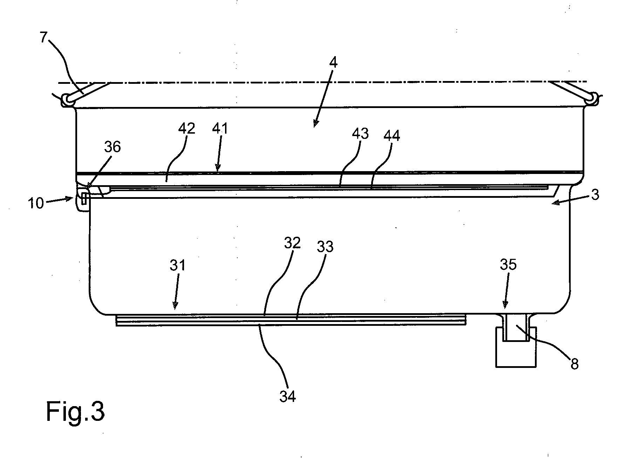

In Fig. 3 ist eine schematische Schnittdarstellung eines weiteren Ausführungsbeispiels eines Gargeräts 1 gezeigt. Bei dieser Ausgestaltung sind der erste Teilbereich 3 und der zweite Teilbereich 4 des Garbehälters 2 als separate Bereiche ausgebildet, wobei der erste Teilbereich 3 unterhalb des zweiten Teilbereichs 4 angeordnet ist. Die beiden Teilbereiche 3 und 4 sind als separate Komponenten ausgebildet, welche lösbar miteinander verbunden sind. Dazu ist insbesondere eine Verbindung 10 vorgesehen, welche als Schnappverbindung, Rastverbindung oder dergleichen ausgebildet sein kann. Der topfartige zweite Teilbereich 4 ist auf einem oberen Rand 36 des ersten Teilbereichs 3 aufgesetzt. Der in dem ersten Teilbereich 3 erzeugte Wasserdampf kann durch ein oder mehrere Öffnungen im Boden 41 des zweiten Teilbereichs 4 in den Zubereitungsraum, in dem sich das Gargut befindet, des zweiten Teilbereichs 4 gelangen.

Darüber hinaus ist bei dieser Ausführung gemäß Fig. 3 die Bratzone des zweiten Teilbereichs 4 lösbar ausgebildet. Insbesondere kann diese aufgesteckt werden. Bevorzugt ist somit die Verbundplatte 42, die Zusatzplatte 43 und das Heizelement 44 modular ausgebildet und können in das gezeigte Gargerät 1 eingesteckt oder entnommen werden. Auch bei dieser lösbaren Ausgestaltung ist der Heizkörper vollständig wasserdicht gekapselt.

In der Ausführung gemäß den Darstellungen in Fig. 1 und Fig. 2 ist dieser Heizkörper integriert und somit unlösbar mit dem Garbehälter verbunden. Insbesondere ist dabei vorgesehen, dass die Verbundplatten 32 und 42 mit dem Rahmen des Garbehälters 1 verklebt oder verschweißt sind.

In Fig. 4 ist eine Schnittdarstellung eines Teilausschnitts im Bodenbereich des zweiten Teilbereichs 4 des Garbehälters 2 gezeigt. Die Verbundplatte 42 umfasst eine obere Edelstahlschicht 421 und eine daran anschließende Aluminiumschicht 422. An die Aluminiumschicht 422 schließt eine weitere Edelstahlschicht 423 an. Im Ausführungsbeispiel umfasst die Verbundplatte 42 somit drei Schichten 421 bis 423. Sowohl die Anzahl, die Ausgestaltung als auch die Anordnung der einzelnen Schichten ist lediglich beispielhaft.

Im Ausführungsbeispiel ist die mittlere Aluminiumschicht 422 mit einer wesentlich größeren Dicke ausgebildet als die obere und die untere Edelstahlschicht 421 bzw. 423.

Anschließend an die untere Edelstahlschicht 423 ist die Zusatzplatte 43 angeordnet, wobei an der Unterseite dieser Zusatzplatte 43 das Heizelement 44 als Dickschichtheizkörper ausgebildet angeordnet ist.

Die Verbundplatte 42, die Zusatzplatte 43 und das Heizelement 44 sind lösbar miteinander verbunden und im Ausführungsbeispiel über Schrauben 12a und 12b verschraubt. An der Unterseite des Heizelements 44 ist ein Blech 45 angeordnet, welches wellenförmig ausgebildet ist und Andrucknoppen 45a, 45b und 45c aufweist, welche die mechanisch stabile Verbindung der einzelnen Komponenten gewährleisten.

Darüber hinaus ist in diesem Verbundsystem eine Öffnung bzw. Aussparung 13 ausgebildet, in welche sich der Temperatursensor 14b erstreckt. Die Aussparung 13 ist in der Ausführung so ausgebildet, dass sie bis zur Unterseite der oberen Edelstahlschicht 421 reicht. Der Temperatursensor ist im Ausführungsbeispiel als PT1000 ausgebildet. Da dieser Temperatursensor 14b direkt an der Geräteunterseite am Innenboden des Garbehälters 1 anliegt, kann die Temperatur sehr genau erfasst und über eine nicht dargestellte Steuer- und Regeleinheit geregelt werden.

Auch die Anordnung der Verbundplatte 32, der Zusatzplatte 33 und des Heizelements 34 kann gemäß der Ausgestaltung in Fig. 4 ausgebildet sein. Insbesondere in dem ersten Teilbereich 3 kann die Anordnung auch anderweitig ausgestaltet sein. Die Verbundplatte kann vollständig entfallen oder aber auch eine andere Schichtzusammensetzung aufweisen. Darüber hinaus kann auch die Zusatzplatte 33 nicht vorhanden sein.

Die in Fig. 4 erläuterte Ausgestaltung an der Unterseite eines Garbehälters 1 kann auch bei allen anderen Gargeräten mit einem Garbehälter ausgebildet sein. Insbesondere kann dies auch bei Gargeräten, welche lediglich zum Dämpfen oder Braten oder zu einem scharfen Anbraten mit anschließendem Schmoren in einem Dampfbräter vorgesehen sein. Es muss somit nicht unbedingt ein Gargerät 1, welches zum Durchführen der Zubereitungsvorgänge Dämpfen, Braten und Schmoren ausgebildet ist, vorhanden sein, um die Unterseite eines Garbehälters 2 gemäß der Ausgestaltung in Fig. 4 verwenden zu können. Gerade bei einer derartigen Ausgestaltung eines Gargeräts 2, welches Mittel zum Durchführen der Zubereitungsvorgänge Dämpfen, Braten und Schmoren aufweist, erweist sich eine derartige Ausgestaltung der Unterseite des Garbehälters 1 gemäß der Darstellung in Fig. 4 jedoch als besonders vorteilhaft.

## Patentansprüche

1. Gargerät mit einem Garbehälter(2) und einem Heizelement (34, 44), wobei das Gargerät (1) Mittel zum Durchführen von Zubereitungsvorgängen Dämpfen, Braten und Schmoren aufweist, und wobei der Garbehälter (2) einen ersten Teilbereich (3) zur Dampferzeugung und einen zweiten Teilbereich (4) zum Braten aufweist, **dadurch gekennzeichnet, dass** der Boden (31, 41) des Garbehälters (2) zumindest eine das Verbundplatte (32, 42) umfasst und unterhalb der Verbundplatte (32, 42) das Heizelement (34, 44) angeordnet ist.

2. Gargerät nach Anspruch 1, **dadurch gekennzeichnet, dass** im Boden (31, 41) des Garbehälters (2), insbesondere im ersten Teilbereich (3), eine Ablassöffnung (35) ausgebildet ist, welche mit einem Abflussstopfen (8) verschließbar ist.

3. Gargerät nach einem der vorhergehenden Ansprüche, **dadurch gekennzeichnet, dass** zwischen der Verbundplatte (32, 42) und dem Heizelement (34, 44) eine Zusatzplatte (33, 43), insbesondere eine zumindest anteilig aus Graphit ausgebildete Platte, angeordnet ist.

4. Gargerät nach Anspruch 3, **dadurch gekennzeichnet, dass** die Verbundplatte (32, 42), die Zusatzplatte (33, 43) und das Heizelement (34, 44) lösbar miteinander verbunden sind, insbesondere miteinander verschraubt sind.

5. Gargerät nach einem der vorhergehenden Ansprüche, **dadurch gekennzeichnet, dass** am Boden (31) des ersten Teilbereichs (3) eine erste Verbundplatte (32) und am Boden (41) des zweiten Teilbereichs (4) eine zweite Verbundplatte (42) ausgebildet ist.

6. Gargerät nach einem der Ansprüche 1 bis 5, **dadurch gekennzeichnet, dass** die Verbundplatte (32, 42) eine Schicht (421, 423) aus Edelstahl und eine Schicht (422) aus Aluminium aufweist.

7. Gargerät nach einem der Ansprüche 1 bis 6, **dadurch gekennzeichnet, dass** in der Verbundplatte (32, 42) eine Aussparung (13) ausgebildet ist, in welcher ein Temperatursensor (14b, 14c) angeordnet ist.

8. Gargerät nach Anspruch 7, **dadurch gekennzeichnet, dass** die Aussparung (13) bis zur ersten, dem Heizelement (34, 44) abgewandten Edelstahlschicht (421) ausgebildet ist.

9. Gargerät nach einem der Ansprüche 1 bis 8, **dadurch gekennzeichnet, dass** zumindest die Verbundplatte (32, 42), insbesondere die Verbundplatte (32, 42), die Zusatzplatte (33, 43) und das Heizelement (34, 44) lösbar an dem Garbehälter (2) angebracht ist.

10. Gargerät nach einem der Ansprüche 1 bis 9, **dadurch gekennzeichnet, dass** die Verbundplatte (32, 42) in den Garbehälter (2) einsteckbar ist.

11. Gargerät nach einem der vorhergehenden Ansprüche, **dadurch gekennzeichnet, dass** der erste Teilbereich (3) unterhalb des zweiten Teilbereichs (4) angeordnet ist.

12. Gargerät nach einem der vorhergehenden Ansprüche, **dadurch gekennzeichnet, dass** der erste Teilbereich (3) separat zu dem zweiten Teilbereich (4) ausgebildet ist und mit dem zweiten Teilbereich (4) lösbar verbunden ist.

13. Gargerät nach einem der vorhergehenden Ansprüche, **dadurch gekennzeichnet, dass** der Garbehälter (2) einstückig ausgebildet ist und die beiden Teilbereiche (3, 4) integriert sind.

14. Gargerät nach einem der vorhergehenden Ansprüche, **dadurch gekennzeichnet, dass** die beiden Teilbereiche (3, 4) nebeneinander ausgebildet sind und jeweils an eine Seitenwand des Garbehälters (2a) angrenzen und unterschiedliche Tiefen (t1, t2) aufweisen.

## Claims

1. Cooking appliance with a cooking container (2) and a heating element (34, 44), wherein the cooking appliance (1) comprises means for carrying out preparation processes of steam-cooking, roasting and braising and wherein the cooking container (2) has a first sub-region (3) for generation of steam and a second sub-region (4) for roasting, **characterised in that** the base (31, 41) of the cooking container (2) comprises at least one composite plate (32, 42) and the heating element (34, 44) is arranged under the composite plate (32, 42).

2. Cooking appliance according to claim 1, **characterised in that** an outflow opening (35), which is closable by an outflow plug (8), is formed in the base (31, 41) of the cooking container (2), particularly in the first sub-region (3).

3. Cooking appliance according to one of the preceding claims, **characterised in that** an additional plate (33, 43), particularly a plate constructed at least proportionally from graphite, is arranged between the composite plate (32, 42) and the heating element (34, 44).

4. Cooking appliance according to claim 3, **characterised in that** the composite plate (32, 42), the additional plate (33, 43) and the heating element (34, 44) are detachably connected together, particularly screw-connected together.

5. Cooking appliance according to any one of the preceding claims, **characterised in that** a first composite plate (32) is formed at the base (31) of the first sub-region (3) and a second composite plate (42) is formed at the base (41) of the second sub-region (4).

6. Cooking appliance according to any one of claims 1 to 5, **characterised in that** composite plate (32, 42) has a layer (421, 423) of stainless steel and a layer (422) of aluminium.

7. Cooking appliance according to any one of claims 1 to 6, **characterised in that** a recess (13) in which a temperature sensor (14b, 14c) is arranged is formed in the composite plate (32, 42).

8. Cooking appliance according to claim 7., **characterised in that** the recess (13) is formed up to the first stainless steel layer (421) remote from the heating element (34, 44).

9. Cooking appliance according to any one of claims 1 to 9, **characterised in that** at least the composite plate (32, 42), particularly the composite plate (32, 42), the additional plate (33, 43) and the heating element (34, 44), is or are detachably mounted on the cooking container (2).

10. Cooking appliance according to any one of claims 1 to 9, **characterised in that** the composite plate (32, 42) is insertable into the cooking container (2).

11. Cooking appliance according to any one of the preceding claims, **characterised in that** the first sub-region (3) is arranged below the second sub-region (4).

12. Cooking appliance according to any one of the preceding claims, **characterised in that** the first sub-region (3) is formed separately from the second sub-region (4) and is detachably connected with the second sub-region (4).

13. Cooking appliance according to any one of the preceding claims, **characterised in that** the cooling container (2) is of integral construction and the two sub-regions (3, 4) are integrated.

14. Cooking appliance according to any one of the preceding claims, **characterised in that** the two sub-regions (3, 4) are formed adjacent to one another and each adjoin a respective side wall of the cooking container (2a) and have different depths (t1, t2).

## Revendications

1. Appareil de cuisson comprenant un réservoir de cuisson (2) et un élément de chauffe (34, 44), l'appareil de cuisson (1) présentant des moyens pour réaliser des opérations de préparation cuire à la vapeur, rôtir et cuire à l'étuvée, et le réservoir de cuisson (2) présentant une première zone partielle (3) destinée à produire de la vapeur et une deuxième zone partielle (4) destinée à rôtir, **caractérisé en ce que** le fond (31, 41) du réservoir de cuisson (2) comprend au moins une plaque composite (32, 42) et **en ce que** l'élément de chauffe (34, 44) est disposé en dessous de la plaque composite (32, 42).

2. Appareil de cuisson selon la revendication 1, **caractérisé en ce qu'**une ouverture d'évacuation (35) est réalisée dans le fond (31, 41) du réservoir de cuisson (2), notamment dans la première zone partielle (3), laquelle ouverture d'évacuation peut être fermée à l'aide d'un bouchon (8).

3. Appareil de cuisson selon l'une quelconque des revendications précédentes, **caractérisé en ce qu'**une plaque supplémentaire, notamment une plaque réalisée au moins en partie en graphite, est disposée entre la plaque composite (32, 42) et l'élément de chauffe (34, 44).

4. Appareil de cuisson selon la revendication 3, **caractérisé en ce que** la plaque composite (32, 2), la plaque supplémentaire (33, 43) et l'élément de chauffe (34, 44) sont reliés entre eux de manière amovible, notamment vissés entre eux.

5. Appareil de cuisson selon l'une quelconque des revendications précédentes, **caractérisé en ce qu'**une première plaque composite (32) est réalisée au fond (31) de la première zone partielle (3) et **en ce qu'**une seconde plaque composite (42) est réalisée au fond (41) de la deuxième zone partielle (4).

6. Appareil de cuisson selon l'une quelconque des revendications 1 à 5, **caractérisé en ce que** la plaque composite (32, 42) présente une couche (421, 423) en acier inoxydable et une couche (422) en aluminium.

7. Appareil de cuisson selon l'une quelconque des revendications 1 à 6, **caractérisé en ce qu'**un évidement (13) est réalisé dans la plaque composite (32, 42), dans lequel est disposé un capteur de température (14b, 14c).

8. Appareil de cuisson selon la revendication 7, **caractérisé en ce que** l'évidement (13) est réalisé jusqu'à la première couche (421) en acier inoxydable, détournée de l'élément de chauffe (34, 44).

9. Appareil de cuisson selon l'une quelconque des revendications 1 à 8, **caractérisé en ce qu'**au moins la plaque composite (32, 42), notamment la plaque composite (32, 42), la plaque supplémentaire (33, 43) et l'élément de chauffe (34, 44), sont installés de manière amovible sur le réservoir de cuisson (2).

10. Appareil de cuisson selon l'une quelconque des revendications 1 à 9, **caractérisé en ce que** la plaque composite (32, 42) est insérable dans le réservoir de cuisson (2).

11. Appareil de cuisson selon l'une quelconque des revendications précédentes, **caractérisé en ce que** la première zone partielle (3) est disposée en dessous de la deuxième zone partielle (4).

12. Appareil de cuisson selon l'une quelconque des revendications précédentes, **caractérisé en ce que** la première zone partielle (3) est réalisée de manière séparée de la deuxième zone partielle (4) et est reliée à la deuxième zone partielle (4) de manière amovible.

13. Appareil de cuisson selon l'une quelconque des revendications précédentes, **caractérisé en ce que** le réservoir de cuisson (2) est réalisé d'une seule pièce et **en ce que** les deux zones partielles (3, 4) sont intégrées.

14. Appareil de cuisson selon l'une quelconque des revendications précédentes, **caractérisé en ce que** les deux zones partielles (3, 4) sont réalisées l'une à côté de l'autre et sont respectivement adjacentes à une paroi latérale du réservoir de cuisson (2a) et présentent différentes profondeurs (t1, t2).
